# EUROPÄISCHE PATENTSCHRIFT

(11) **EP 1 169 192 B1**
(45) Veröffentlichungstag und Bekanntmachung des Hinweises auf die Patenterteilung: **06.10.2004**
(21) Anmeldenummer: 01909480.4
(22) Anmeldetag: 17.01.2001
(51) Int. Cl.: B60N 2/08, B60N 2/02

(54) **VERSTELLVORRICHTUNG**
ADJUSTING DEVICE
DISPOSITIF D'AJUSTAGE

(30) Priorität: 31.01.2000 DE 10004092
(43) Veröffentlichungstag der Anmeldung: 09.01.2002
(73) Patentinhaber: ROBERT BOSCH GMBH, 70442 Stuttgart (DE)
(72) Erfinder: URSEL, Eckhard, 77815 Buehl (DE); GENTER, Gerhard, 77855 Achern (DE); WINTER, Manfred, 77839 Lichtenau (DE); HAUSSECKER, Walter, 77830 Buehlertal (DE); SCHILLER, Herbert, 77830 Buehlertal (DE); MAENNLE, Erik, 77704 Oberkirch (DE); HARTZ, Guenter, 77830 Buehlertal (DE); SCHMIDT, Willi, 76297 Stutensee-Buechig (DE); WOLF, Joerg, 76139 Karlsruhe (DE); PROHASKA, Werner, 77833 Ottersweier (DE); STEUER, Martin, 77830 Buehlertal (DE)
(74) Vertreter: Hörschler, Wolfram Johannes
(86) Internationale Anmeldenummer: PCT/DE2001/000168
(87) Internationale Veröffentlichungsnummer: WO 2001/056828

(56) Entgegenhaltungen:
- US-A- 5 950 978
- PATENT ABSTRACTS OF JAPAN vol. 1998, no. 10, 31. August 1998 (1998-08-31) & JP 10 138806 A (IKEDA BUSSAN CO LTD), 26. Mai 1998 (1998-05-26)
- PATENT ABSTRACTS OF JAPAN vol. 1998, no. 10, 31. August 1998 (1998-08-31) & JP 10 138805 A (IKEDA BUSSAN CO LTD), 26. Mai 1998 (1998-05-26)
- PATENT ABSTRACTS OF JAPAN vol. 1998, no. 10, 31. August 1998 (1998-08-31) & JP 10 138804 A (IKEDA BUSSAN CO LTD), 26. Mai 1998 (1998-05-26)

## Beschreibung

Die Erfindung betrifft eine elektromotorische Vorrichtung zur Längsverstellung von Sitzen in Kraftfahrzeugen.

### Stand der Technik

Bisher bekannte elektromotorische Sitzlängsverstellungen basieren auf dem Prinzip, daß ein oder mehrere Getriebemechanismen benutzt werden, um einen Sitz, insbesondere einen Kraftfahrzeugsitz, bezüglich seiner Längsposition mittels eines Motors zu verschieben. Dadurch kann der vor dem Sitz liegende Fußraum in seiner Größe verändert werden und ist an die Beinlänge von Personen unterschiedlicher Größe anpaßbar.

Aus US 5,950,978 geht eine Sitzverstellvorrichtung für ein Kraftfahrzeug hervor. Unterhalb eines Fahrzeugsitzes ist ein Antriebsmotor angeordnet. Der Fahrzeugsitz weist eine Oberschiene auf, die realtiv zu einer am Boden des Fahrzeuges angeordneten Unterschiene 4 bewegbar ist. Die Antriebsleistung des Antriebsmotors wird mittels eines Schneckenradgetriebes an eine Übertragungswelle übertragen. An der Übertragungswelle ist ein Stirnrad aufgenommen, welches mit einem weiteren Stirnrad, welches auf einer Stummelwelle aufgenommen ist, kämmt. An der Stummelwelle ist ein weiteres Schneckenradgetriebe ausgebildet, welches mit einer parallel zur Unterschiene verlaufenden Schnecke versehen ist. Die Schneckengänge der Schnecke kämmen mit Ausnehmungen in der Unterschiene 4.

Üblicherweise ist der Motor unter der Sitzfläche des Sitzes untergebracht. Typischerweise ist der Sitz auf zwei parallelen Oberschienen angeordnet, welche in jeweiligen Unterschienen geführt sind. Um den Sitz in den beiden Unterschienen synchron antreiben zu können, wird die Leistung des Motors auf eine Übertragungswelle übertragen. Das Drehmoment der Übertragungswelle wird dann über zwei Getriebemechanismen in eine synchrone Verschiebung der in den jeweiligen parallelen Unterschienen angeordneten Oberschienen umgelenkt. Ein häufig verwendetes System mit Spindelgetrieben zeichnet sich insbesondere durch hohe Crash-Festigkeit aus. Nachteilig ist jedoch die schnell drehende Übertragungswelle, welche einen ungünstigen, hohen Geräuschpegel verursacht. Darüber hinaus verläuft die Übertragungswelle in unmittelbarer Nähe der Sitzvorderkante und somit in der Nähe des Fußbereiches. Dadurch kann sie leicht durch die auf dem Sitz befindliche Person oder durch einen Gegenstand im Fußraum beschädigt werden oder diese stören.

Aufgabe der vorliegenden Erfindung ist es, eine Vorrichtung zur Längsverstellung von Sitzen in Kraftfahrzeugen zu schaffen, welche eine gegen Beschädigungen geschütztere Konstruktion und während ihrer Betätigung einen reduzierten Geräuschpegel aufweist.

Gelöst wird diese Aufgabe erfindungsgemäß durch eine Verstellvorrichtung mit den Merkmalen gemäß Anspruch 1. Vorteilhafte Ausgestaltungen der Erfindung werden durch die in den Unteransprüchen 2 bis 7 angegebenen Merkmale ermöglicht.

### Vorteile der Erfindung

Es wird eine Vorrichtung zur Längsverstellung von Sitzen in Kraftfahrzeugen vorgeschlagen, bei der durch Verwenden eines Untersetzungsgetriebes die Übertragungswelle von dem sensiblen Bereich der Sitzvorderkante in Richtung der Mitte des Sitzes und damit weiter unter den Sitz verlegt wird. Dadurch wird eine vorteilhafte beschädigungssichere Unterbringung des elektromotorischen Verstellmechanismus unter dem Sitz erzielt.

Durch Verwenden des Untersetzungsgetriebes zusätzlich zu den zur Kraftübertragung notwendigen Getriebemechanismen ist eine Reduzierung der Drehgeschwindigkeit der Übertragungswelle möglich. Dadurch kann vorteilhaft die durch Unwuchten der Übertragungswelle bedingte Geräuschentwicklung vermindert werden. Als vorteilhaft hat sich dabei ein Untersetzungsgetriebe mit einem Untersetzungsverhältnis von kleiner als 0.3 erwiesen.

Die Realisierung der Erfindung kann durch einfache Modifizierungen an einer bewährten und erprobten Sitzlängsverstellung erreicht werden, wobei der Großteil der zuverlässigen und vorteilhaften Teile der bisher verwendeten Vorrichtung übernommen werden kann. Dadurch können die Kosten gering gehalten werden und beschränken sich im wesentlichen auf die Verwirklichung und Erprobung der erfindungsgemäßen neuen Merkmale.

Vorteilhaft ist ferner ein synchroner motorisierter Antrieb von zwei unter dem Sitz parallel angeordneten Oberschienen in jeweiligen Unterschienen über eine Übertragungswelle in Kombination mit den Merkmalen der vorliegenden Erfindung. Durch Verwenden eines einzigen Motors ist ein Verschieben des Sitzes ohne das Risiko eines Verkantens der Oberschienen in den Unterschienen möglich.

### Zeichnung

In der Zeichnung ist eine bevorzugte Ausführungsform des erfindungsgemäßen Verstellvorrichtung dargestellt, die in der nachfolgenden Beschreibung näher erläutert ist. Es zeigen
- Fig. 1a: die erfindungsgemäße Verstellvorrichtung im Längsschnitt,
- Fig. 1b: einen Schnitt längs der Linie A - A von Fig. 1a,
- Fig. 1c: einen Schnitt längs der Linie C - C von Fig. 1a, und
- Fig. 2: eine weitere Ausführungsform der erfindungsgemäßen Verstellvorrichtung im Längsschnitt.

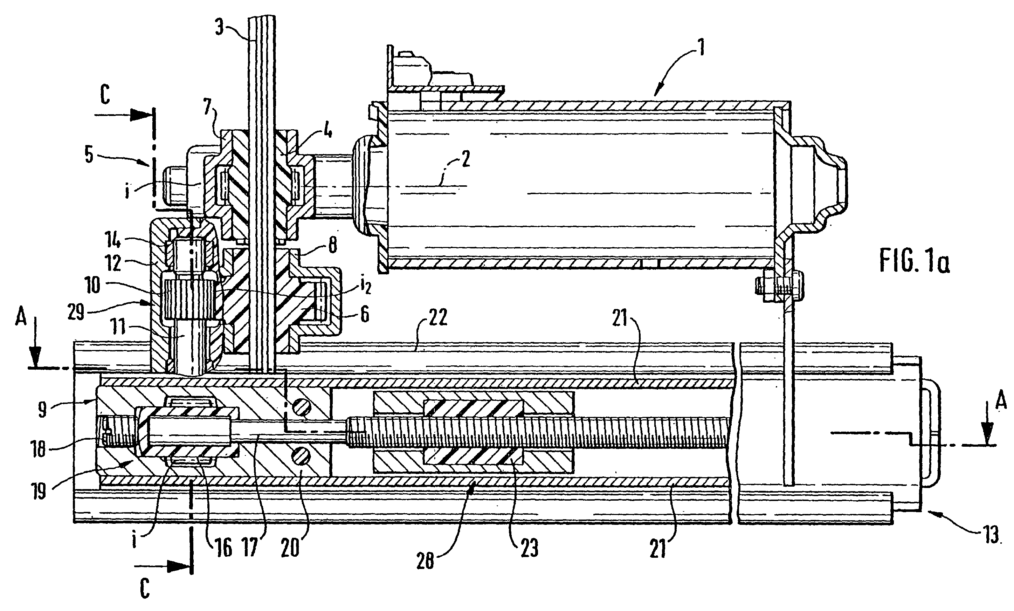

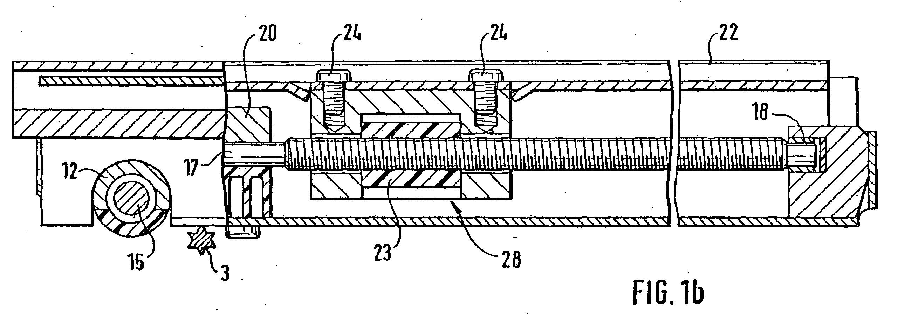

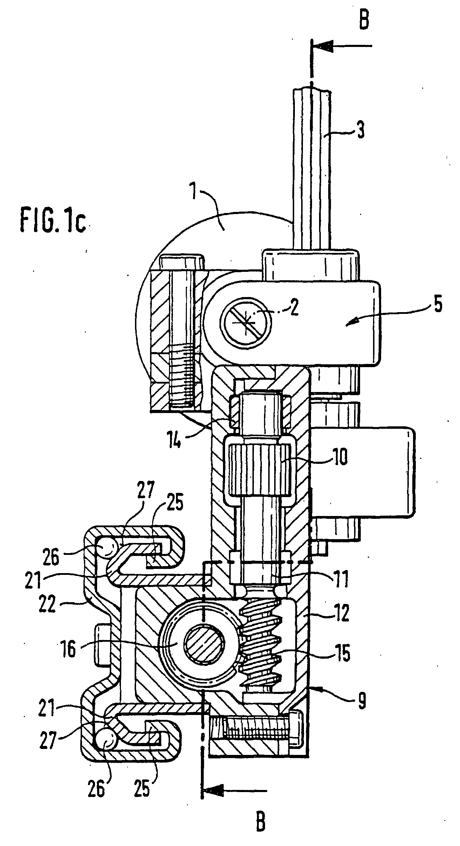

In Fig. 1a ist ein Motor 1 zu erkennen, dessen Welle sich längs der Achse 2 erstreckt und als Zahnstange (nicht gezeigt) ausgebildet ist. Die Zahnstange steht mit einem auf einer Profilwelle 3 montierten Zahnrad 4 aus Kunststoff in Zahneingriff. Das vom Motor 1 ausgeübte Drehmoment wird durch den durch die Zahnstange und das Zahnrad 4 gebildeten ersten Getriebemechanismus 5 mit einem Übersetzungsverhältnis von i₁= 5,5 auf die Profilwelle 3 übertragen.

Diese treibt wiederum ein weiteres Zahnrad 6 an, welches ebenfalls aus Kunststoff hergestellt ist. Die Zahnräder 4, 6 befinden sich in entsprechenden Gehäusen 7, 8, welche den Zahnrädern 4, 6 gleichzeitig als Lager dienen. Das Gehäuse 7 ist fest mit dem Motor 1 verbunden, oder ist aus einem Stück mit einem Gehäuse für die Welle des Motors 1 gebildet, während das Gehäuse 8 mit einer am Sitz befestigten Oberschiene 9 verbunden ist. Das auf die Profilwelle 3 aufgesteckte Zahnrad 6 befindet sich in Zahneingriff mit einem weiteren Zahnrad 10, welches auf einer ersten Welle 11 angeordnet ist.

Da das Zahnrad 10 einen im Verhältnis zum Zahnrad 6 kleineren Durchmesser aufweist, bildet die Kombination der Zahnräder 6 und 10 hier einen Getriebemechanismus 29 mit einem Untersetzungsverhältnis von i₂ = 0,3. Dadurch wird die Drehzahl der ersten Welle 11 erhöht oder mit anderen Worten, wenn im Vergleich zu einer Vorrichtung ohne diesen Getriebemechanismus 29 dieselbe Drehzahl der ersten Welle 11 erzielt werden soll, muß die Übertragungswelle 3 mit einer reduzierten Drehzahl drehen. Bei der vorliegenden Ausführungsform wird somit im Vergleich zu einer Vorrichtung ohne zusätzlichen Getriebemechanismus 29 die Drehzahl der Übertragungswelle von 3000 U/min auf 1000 U/min abgesenkt, wobei gleichzeitig das auf die erste Welle 11 wirkende Drehmoment um den entsprechenden reziproken Faktor erhöht wird.

Im Vergleich zu einer Ausführungsform ohne Untersetzung muß die erste Welle 11 eine dem höheren Drehmoment angemessene Steifigkeit aufweisen. Durch das zusätzliche Getriebe wird es ferner möglich einen Motor 1 mit Getriebe durch einen getriebelosen Motor 1 zu ersetzen. Die Anpassung einer festen Motordrehzahl an eine für den Betrieb der Vorrichtung geeignete Drehzahl kann durch den zusätzlichen Getriebemechanismus 29 erfolgen.

Die erste Welle 11 wird in einem Gehäuse 12 aufgenommen, welches fest mit der Oberschiene 9 einer Führungsschienenanordnung 13 und/oder dem Gehäuse 8 verbunden ist. Es sind zur reibungsarmen Drehung Lager 14 für die erste Welle 11 vorgesehen. Auf der senkrecht zur Führungsschienenanordnung 13. angeordneten ersten Welle 11 befindet sich mittig zur Führüngsschienenanordnung 13 eine Schnecke 15, welche mit einem Zahnrad 16 in Zahneingriff steht. Das Zahnrad 16 ist auf einer zweiten Welle 17 montiert, welche parallel zur Führungsschienenanordnung 13 in der Oberschiene 9 in Aufnahmelagem 18 gelagert ist. Der durch die Schnecke 15 und das Zahnrad 16 zusammen mit den Wellen 11 und 17 gebildete Getriebemechanismus 19 wird in einem Gehäuse 20 aufgenommen, das zwischen Führungsschienen 21 der Oberschiene 9 angeordnet ist und mit diesen fest verbunden ist. Mit den bei der vorliegenden Äusführungsform verwendeten Zähnezahlen beträgt das Übersetzungsverhältnis in dem zuletzt genannten Getriebemechanismus 19 i₃ = 6,33. Außerhalb des Gehäuses 20 ist die zweite Welle 17 als Spindel ausgebildet, auf der eine an einer Unterschiene 22 befestigte Spindelmutter 23 axial bewegt wird. Die Spindelmutter 23 ist mit Schrauben 24 an der Unterschiene 22 befestigt.

Alternativ kann anstelle des durch die Spindel 17 und die Spindelmutter 23 gebildeten Getriebemechanismus 28 auch eine Zahnstange und ein Ritzel, oder eine mit einer entsprechenden Schnecke in Zahneingriff stehende Zahnstange verwendet werden.

Die Führungsschienenanordnung 13 besteht aus einer an einem Fahrzeugboden (nicht gezeigt) angebrachten Unterschiene 22 und einer darin in Längsrichtung verschiebbaren Oberschiene 9. Dabei weist die Unterschiene 22 einen im wesentlichen C-förmigen Querschnitt auf. Die auf dem Fahrzeugboden aufliegende Seite der Unterschiene 22 ist geschlossen, während die obere Seite zum Durchgang der Oberschiene 9 offen ist. An der oberen Seite weist die Unterschiene 22 nach innen zurückgebogene Ränder 25 auf, welche eine nach unten geöffnete U-förmige Rinne bilden. Diese dient als Anlageleiste für die zurückgebogenen Führungsschienen 21 der Oberschiene 9. In viertelkreisförmig ausgerundeten unteren Ecken der Unterschiene 22 sind Kugeln 26 aufgenommen, die der Oberschiene 9 als Auflage und reibungsreduzierende Lagerung für eine Längsverschiebung in der am Fahrzeugboden befestigten Unterschiene 22 dienen. Die zurückgebogenen Führungsschienen 21 der Oberschiene 9 weisen schräge Auflageflächen 27 auf, welche in Kontakt mit den Kugeln 26 stehen. Über die Berührungspunkte zwischen den Kugeln 26 und den Auflageflächen 27 wird das volle Gewicht des gesamten Sitzes auf die Unterschiene 22 übertragen. Durch die als schräg nach außen gestellte Auflageflächen 27 ausgebildeten Führungsschienen und durch ihre Anlage an den zurückgebogenen Rändern 25 wird eine stabile und reibungsarme Führung der Oberschiene 9 in der Unterschiene 22 sichergestellt.

Die in Fig. 1a gezeigte Profilwelle 3 ist in Wirklichkeit bei der vorliegenden Ausführungsform über die dargestellte Länge hinaus verlängert und mit zu den gezeigten Getriebemechanismen 19, 28, 29 spiegelbildlich angeordneten, weiteren nicht gezeigten Getriebemechanismen und einer weiteren Führungsschienenanordnung 13 verbunden. Die Leistung des Motors 1 kann somit synchron auf zwei Führungsschienenanordnungen 13 übertragen werden, um zwei Oberschienen 9 in zwei parallel angeordneten Unterschienen 22 anzutreiben.

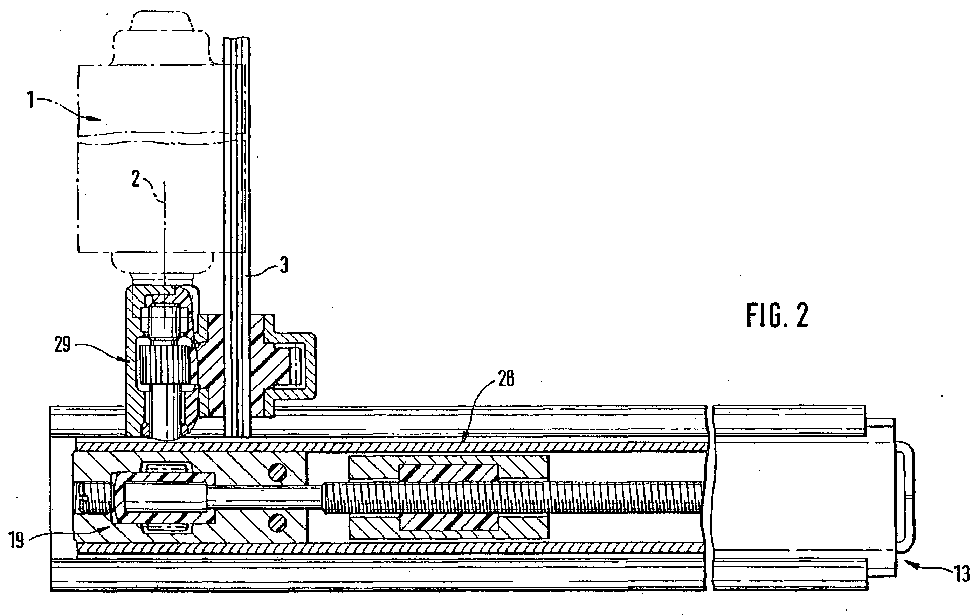

In den Fig. 1a bis 1c ist die Achse 2 der Welle des Motors 1 parallel zur Verschieberichtung des Sitzes angeordnet. Denkbar ist auch eine Anordnung der Achse der Welle des Motors z.B. senkrecht zur Verschieberichtung, wie in Fig. 2 gezeigt ist.

### Bezugszeichenliste

- 1: Motor
- 2: Achse
- 3: Profilwelle
- 4: Zahnrad
- 5: Getriebemechanismus
- 6: Zahnrad
- 7: Gehäuse
- 8: Gehäuse
- 9: Oberschiene
- 10: Zahnrad
- 11: erste Welle
- 12: Gehäuse
- 13: Führungsschienenanordnung
- 14: Lager
- 15: Schnecke
- 16: Zahnrad
- 17: zweite Welle
- 18: Aufnahmelager
- 19: Getriebemechanismus
- 20: Gehäuse
- 21: Führungsschiene
- 22: Unterschiene
- 23: Spindelmutter
- 24: Schraube
- 25: zurückgebogene Ränder
- 26: Kugel
- 27: Auflagefläche
- 28: Getriebemechanismus
- 29: Getriebemechanismus

## Patentansprüche

1. Vorrichtung zur Längsverstellung von Sitzen in Kraftfahrzeugen mit einem Motor (1) und einer an einem Sitz festgelegten Oberschiene (9) und einer an einem Boden festgelegten Unterschiene (22), wobei die Unterschiene (22) und die Oberschiene (9) relativ zueinander verschiebbar angeordnet sind sowie einem ersten Getriebemechanismus (5) zur Übertragung von Motorleistung auf eine Übertragungswelle (3) und ein Untersetzungsgetriebe (29) zur Übertragung der Motorleistung von der Übertragungswelle (3) auf eine erste Welle (11), mittels welchem die Übertragungswelle (3) in ihrer Drehzahl reduzierbar und weiter unter den Sitz verlegbar ist und einem zweiten Getriebemechanismus (19) zur Übertragung der Motorleistung von der ersten Welle (11) auf eine parallel zur Oberschiene (9) angeordnete zweite Welle und einem dritten, durch die zweite Welle (17) angetriebenen Getriebemechanismus (28) zur Verstellung der Position der Oberschiene (9) relativ zur Unterschiene (22), **dadurch gekennzeichnet, dass** das Untersetzungsgetriebe (29) ein Untersetzungsverhältnis von ≤ 0,3 aufweist.

2. Vorrichtung nach Anspruch 1, bei welcher die Übertragungswelle (3) eine Profilwelle ist.

3. Vorrichtung nach einem der Ansprüche 1 bis 2, bei welcher an dem Sitz zwei parallele Oberschienen (9) angeordnet sind, die in jeweiligen Unterschienen (22) verschiebbar sind, wobei die Oberschienen (9) mittels der Übertragungswelle und jeweils entsprechenden, die Motorleistung übertragenden Mechanismen (19, 28, 29) synchron verschoben werden.

4. Vorrichtung nach einem der Ansprüche 1 bis 3, bei welcher mindestens ein Getriebemechanismus (19, 28) ein Spindelgetriebe ist.

5. Vorrichtung nach einem der Ansprüche 1 bis 3, bei welcher mindestens ein Getriebemechanismus (19, 28) ein Schneckengetriebe ist.

6. Vorrichtung nach einem der Ansprüche 1 bis 5, bei welcher der Motor (1) unter dem Sitz angeordnet und an diesem befestigt ist.

## Claims

1. Device for the longitudinal adjustment of seats in motor vehicles, having a motor (1) and an upper rail (9), which is fixed on a seat, and a lower rail (22), which is fixed on a floor, the lower rail (22) and the upper rail (9) being arranged displaceably relative to each other, and having a first gear mechanism (5) for transmitting the motor power to a transmission shaft (3) and a step-down gear (29) for transmitting the motor power from the transmission shaft (3) to a first shaft (11), the step-down gear enabling the rotation speed of the transmission shaft (3) to be reduced and enabling it to be placed a good distance below the seat, and a second gear mechanism (19) for transmitting the motor power from the first shaft (11) to a second shaft arranged parallel to the upper rail (9), and a third gear mechanism (28) which is driven by the second shaft (17) and is intended for adjusting the position of the upper rail (9) relative to the lower rail (22), **characterized in that** the step-down gear (29) has a step-down ratio of ≤ 0.3.

2. Device according to Claim 1, in which the transmission shaft (3) is a profiled shaft.

3. Device according to either of Claims 1 and 2, in which two parallel upper rails (9) are arranged on the seat and can be displaced in respective lower rails (22), the upper rails (9) being displaced synchronously by means of mechanisms (19, 28, 29) which correspond in each case with the transition shaft and transmit the motor power.

4. Device according to one of Claims 1 to 3, in which at least one gear mechanism (19, 28) is a spindle gear.

5. Device according to one of Claims 1 to 3, in which at least one gear mechanism (19, 28) is a worm gear.

6. Device according to one of Claims 1 to 5, in which the motor (1) is arranged under the seat and is fastened thereto.

## Revendications

1. Dispositif de réglage longitudinal de sièges dans des véhicules automobiles, comprenant un moteur (1) et un rail supérieur (9) fixé à un siège et un rail inférieur (22) fixé à un plancher, le rail inférieur (22) et le rail supérieur (9) étant disposés de manière à pouvoir se déplacer l'un par rapport à l'autre, ainsi qu'un mécanisme d'engrenage (5) pour la transmission de puissance moteur sur un arbre de transmission (3), et un réducteur (29) pour la transmission de puissance de moteur d'un arbre de transmission (3) sur un premier arbre (11) permettant de réduire la vitesse de rotation de l'arbre de transmission (3) et de le placer plus loin sous le siège, et un deuxième mécanisme d'engrenage (19) pour la transmission de la puissance moteur depuis le premier arbre (11) sur un deuxième arbre parallèle au rail supérieur (9), et un troisième mécanisme d'engrenage (28) entraîné par le deuxième arbre (17) pour ajuster la position du rail supérieur (9) par rapport au rail inférieur (22),
**caractérisé en ce que**
le réducteur (29) a un rapport de démultiplication ≤ 0,3.

2. Dispositif selon la revendication 1,
dans lequel
l'arbre de transmission (3) est un arbre profilé.

3. Dispositif selon l'une quelconque des revendications 1 à 2,
dans lequel
deux rails supérieurs (9) reliés au siège peuvent être déplacés dans des rails inférieurs (22) respectifs, les rails supérieurs (9) étant déplacés de manière synchronisée au moyen de l'arbre de transmission et de mécanismes correspondants respectifs transmetteurs de la puissance de moteur.

4. Dispositif selon l'une quelconque des revendications 1 à 3,
dans lequel
au moins un mécanisme d'engrenage (19, 28) est un engrenage à broche.

5. Dispositif selon l'une quelconque des revendications 1 à 3,
dans lequel
au moins un mécanisme d'engrenage (19, 28) est un engrenage à vis.

6. Dispositif selon l'une quelconque des revendications 1 à 5,
dans lequel
le moteur (1) est disposé sous le siège et fixé à celui-ci.
